# EUROPÄISCHE PATENTSCHRIFT

(11) **EP 1 706 957 B1**
(45) Veröffentlichungstag und Bekanntmachung des Hinweises auf die Patenterteilung: **22.08.2018**
(21) Anmeldenummer: 05706859.5
(22) Anmeldetag: 11.01.2005
(51) Int. Cl.: H04L 9/32, H04L 9/08, G07C 9/00, G06Q 20/40, G06Q 20/38, G06Q 20/34, G07F 7/10

(54) **BIOMETRISCHE AUTHENTISIERUNG**
BIOMETRIC AUTHENTICATION
AUTHENTIFICATION BIOMÉTRIQUE

(30) Priorität: 13.01.2004 DE 102004001855
(43) Veröffentlichungstag der Anmeldung: 04.10.2006
(73) Patentinhaber: Giesecke+Devrient Mobile Security GmbH, 81677 München (DE)
(72) Erfinder: BEINLICH, Stephan, 80639 München (DE); MARTINI, Ullrich, 81669 München (DE)
(86) Internationale Anmeldenummer: PCT/EP2005/000173
(87) Internationale Veröffentlichungsnummer: WO 2005/069534

(56) Entgegenhaltungen:
- WO-A-00/36566
- WO-A-01/15378
- WO-A-98/48538
- WO-A-03/100730
- US-A- 6 038 315

## Beschreibung

Die Erfindung betrifft Verfahren und Vorrichtungen zum sicheren Authentisieren und Registrieren von Personen mittels biometrischer Verschlüsselung.

US 6,038,315 A zeigt ein Verfahren zum Normalisieren biometrischer Variationen zum Authentifizieren eines Benutzers.

Für Verfahren und Vorrichtungen dieser Art existieren vielfältige gewerbliche Verwendungsmöglichkeiten, beispielsweise bei elektronischen Geld- transaktionen und Vertragsschlüssen im Banken-und Kreditkartenwesen und im Online-Handel (E-Commerce), in der elektronisch unterstützten Verwaltung (E-Govemance) und dem Betrieb von elektronischen Kommunikationsnetzen aller Art. Die gewerbliche Relevanz derartiger Verfahren ist allein schon daraus ableitbar, dass der Umsatz beim Online-Shopping im Jahre 2002 in der Europäischen Union 4,3 Mrd. Euro betrug.

Eine zuverlässige elektronische Kommunikations-Infrastruktur muss im wesentlichen zwei Bedingungen erfüllen : Sie muss für jeden Kommunikationspartner eindeutig und reproduzierbar feststellen, dass er derjenige ist, der er vorgibt zu sein, also dessen Authentisierung ermöglichen, und sie muss die auszutauschenden Daten vor Manipulation oder Abhören durch Dritte schützen, d. h. deren Integrität sicherstellen.

Beide Ziele können durch den Einsatz geeigneter (symmetrischer oder asymmetrischer) Verschlüsselungsverfahren erreicht werden, mit denen eine Person eine Nachricht mit einem personalisierten Schlüssel zum Sicherstellen ihrer Integrität verschlüsseln kann, die von einem Kommunikationspartner nur mit demselben Schlüssel (symmetrische Verschlüsselung) oder einem speziellen korrespondierenden Schlüssel (asymmetrische Verschlüsselung) zu entschlüsseln ist. Andererseits kann eine Person eine elektronische Signatur generieren, die die zu sendende Nachricht und den personalisierten Schlüssel der Person kodiert, und mit der sich die Person durch Anhängen der Signatur an die betreffende Nachricht eindeutig als Verfasser der Nachricht ausweist und somit authentisiert.

Bei symmetrischen Verschlüsselungsverfahren (z. B. dem "Data Encryption Standard" DES oder dem "International Data Encryption Algorithm" IDEA mit Schlüssellängen von 168 Bit und 128 Bit) besteht das Problem, daß aufgrund der Identität des Verschlüsselungs- und des Entschlüsselungsschlüssels eine Übergabe des Schlüssels an den Empfänger der verschlüsselten Nachricht erforderlich ist und dies einen Ansatzpunkt für kryptoanalytische Angriffe darstellt. Demgegenüber bietet ein asymmetrisches Verfahren (z. B. der RSA/PGP-Algorithmus mit einer Schlüssellänge von bis zu 2084 Bit) mit einem privaten Verschlüsselungsschlüssel für den sich authentisierenden Sender und einem öffentlichen Entschlüsselungsschlüssel für dessen Kommunikationspartner in der Regel zusätzliche Sicherheit. Denn der private Schlüssel kann selbst bei Kenntnis einer unverschlüsselten Nachricht, der entsprechenden verschlüsselten Nachricht und des öffentlichen Schlüssels mit den heute zur Verfügung stehenden Mitteln nicht errechnet werden.

Nachteilig ist bei asymmetrischen Signatur- und Verschlüsselungsverfahren jedoch, daß bei der Authentisierung zwar von einer empfangenen Nachricht über den öffentlichen Entschlüsselungsschlüssel eindeutig auf die Echtheit des privaten Verschlüsselungsschlüssels zurückgeschlossen werden kann, die eindeutige Zuordnung zwischen dem Verschlüsselungsschlüssel und der sendenden Person aber dadurch nicht unbedingt sichergestellt ist. Um einen Mißbrauch des privaten Schlüssels zu verhindern, wird dieses letzte Glied in der Authentisierungskette beispielsweise dadurch geschlossen, daß der private Schlüssel durch ein Kennwort (eine sogenannte "Passphrase" bzw. eine persönliche Identifikationsnummer PIN) geschützt wird, welches ausschließlich dem rechtmäßigen Besitzer des privaten Schlüssels bekannt ist. Wegen der vielfachen Verwendung von Kennworten und PINs werden sie erfahrungsgemäß häufig von den Benutzern niedergeschrieben, woraus sich wiederum ein weiteres Angriffspotential zum Korrumpieren des Verschlüsselungs- bzw. Signatursystems ergibt. Erlangt eine unbefugte Person durch Diebstahl das legitimierende Kennwort eines Anderen, so kennt sie ohne weiteres dessen privaten Schlüssel und kann Nachrichten unter dessen Identität versenden, ohne daß dies für den Empfänger der Nachricht erkennbar wäre.

Eine Möglichkeit, die angesprochenen Probleme herkömmlicher Verschlüsselungsverfahren zu lösen zeigt WO 01/15378 A1 auf. Hierbei wird zunächst aus einer geeigneten biometrischen Eigenschaft einer Person, beispielsweise aus ihrem Fingerabdruck oder Irismuster, mittels geeigneter (Bildverarbeitungs-) Algorithmen ein Merkmalsvektor als Schlüssel extrahiert, der eine bestimmte Anzahl von charakterisierenden, numerischen Werten der biometrischen Eigenschaft repräsentiert. Eine Möglichkeit zur Extraktion geeigneter Merkmale einer biometrischen Eigenschaft offenbart beispielsweise WO 98/48538. Hierbei werden digitale Bilder der biometrischen Eigenschaft mittels der Fourier-Transformation in den (komplexwertigen) Ortsfrequenzraum transformiert und daraus durch die Interaktion mit bestimmten Filterfunktionen Merkmale bzw. Merkmalsvektoren errechnet.

Die WO 01/15378 A1 offenbart weiterhin, daß der aus der digitalisierten biometrischen Eigenschaft extrahierte Merkmalsvektor zur biometrischen Verschlüsselung eines Geheimnisses - beispielsweise des Kennwortes des persönlichen Schlüssels eines asymmetrischen Verschlüsselungsverfahrens - in einem Registrierungsprozeß verwendet wird. Bei der Benutzung des privaten Schlüssels kann sich der legitime Benutzer in einem Authentisierungsprozeß durch erneutes Scannen der betreffenden biometrischen Eigenschaft, Extraktion eines gleichartigen Merkmalsvektors, Entschlüsselung des Kennwortes und Vergleich mit einem auf dem System gespeicherten Kennwort authentisieren. Für einen Kommunikationspartner ist dadurch eine eindeutige Zuordnung einer erhaltenen Nachricht zu dem tatsächlichen Absender im Rahmen der Fälschungssicherheit der biometrischen Eigenschaft des Senders gegeben. Nachteil dieses Verfahrens ist jedoch, daß aus der vollständigen Entschlüsselung des Geheimnisses bzw. dessen unverschlüsselter Speicherung ein erhebliches und für viele Anwendungen inakzeptables Angriffspotential erwächst.

Ein flexibler Einsatz derartiger biometrischer Systeme wird ermöglicht, indem eine berechtigte Person ihre biometrischen Daten in Form des biometrisch verschlüsselten Geheimnisses auf einem separaten digitalen Datenträger, beispielsweise einer Chip-Karte oder Smart-Card, mit sich führt. Damit ist die Authentisierung möglich, indem die Person das auf der Smart-Card gespeicherte biometrisch verschlüsselte Kennwort bzw. die PIN auf ein Terminal lädt, mit ihrer biometrischen Eigenschaft das Kennwort/ die PIN entschlüsselt und dadurch Zugang zu ihrem privaten Schlüssel erhält.

In der Praxis möchte man jedoch bei den meisten Anwendungen der automatischen, elektronischen Authentisierung, insbesondere bei den wirtschaftlich hochrelevanten Bezahl- und Anmeldesystemen, aus Kosten- und Praktikabilitätsgründen auf die Verwendung von personalisierten Smart-Cards oder ähnlichen portablen digitalen Medien verzichten.

Demzufolge liegt der vorliegenden Erfindung die Aufgabe zugrunde, die sichere biometrische Authentisierung von Personen zu ermöglichen, ohne daß sicherheitsrelevante Daten unverschlüsselt vorliegen und ohne daß dazu über die üblichen Ausweisdokumente einer Person hinausgehende zusätzliche personalisierte Medien benötigt werden.

Diese Aufgabe wird erfindungsgemäß durch Verfahren und Vorrichtungen mit den Merkmalen der unabhängigen Ansprüche gelöst. In davon abhängigen Ansprüchen sind vorteilhafte Ausgestaltungen und Weiterbildungen der Erfindung angegeben.

Die im folgenden beschriebenen erfindungsgemäßen Verfahren und Vorrichtungen bestehen prinzipiell aus zwei interagierenden Komponenten. Bevor eine Person die Möglichkeit hat, eine personalisierte Dienstleistung - z. B. bargeldloses Bezahlen durch biometrische Legitimierung, Abgeben einer authentisierten Erklärung, Beantragen begrenzter Ressourcen, etc. - durch biometrische Authentisierung in Anspruch zu nehmen, muß die Person der entsprechenden Infrastruktur bekannt sein, d. h. sie muß zunächst durch Aufnahme ihrer zur biometrischen Authentisierung verwendeten biometrischen Eigenschaft in einem Register registriert werden. Da sich die beiden Komponenten "Registrierung" und "Authentisierung" in allen Ausführungsformen der Erfindung jeweils entsprechen, werden korrespondierende Verfahrens- und Vorrichtungsmerkmale im folgenden parallel beschrieben.

Dementsprechend wird eine Person im Sinne der Erfindung registriert, indem zunächst ein diese Person identifizierendes Geheimnis, d. h. eine PIN oder ein Kennwort, bereitgestellt wird. Hierbei ist es einerseits möglich, das Geheimnis als individuelle Identifikationsnummer, insbesondere als zufällige Zeichenfolge, automatisch erzeugen zu lassen und der sich registrierenden Person vorzuenthalten. Andererseits kann die Person das Geheimnis auch selbst auswählen und zur Registrierung benennen.

Eine erfindungsgemäße Registrierung umfaßt desweiteren die digitale Aufnahme einer geeigneten biometrischen Eigenschaft der Person in Form eines digitalen Bildes. Für den genannten Zweck eignen sich beispielsweise die Fingerabdrücke, also die Papillarstruktur bestimmter Finger, die Irismuster der Augen oder das Spektralmuster einer Sprachäußerung der Person. Aus der digitalisierten biometrischen Eigenschaft wird anschließend ein biometrischer Schlüssel extrahiert, der das komplexe biometrische Muster mittels mathematischer oder signaltheoretischer Algorithmen auf eine Anzahl charakteristischer, numerischer Merkmale reduziert. Mit einem aus diesen Merkmalen gebildeten Merkmalsvektor wird das automatisch erzeugte oder frei gewählte Geheimnis im nächsten Schritt verschlüsselt und für die Person registriert. Ein derart biometrisch verschlüsseltes Geheimnis kann solange risikolos zwischen lokalen Registrierungs- bzw. Authentisierungsterminals und beispielsweise einer zentralen Datenbank übertragen werden, wie der biometrische Schlüssel bzw. die zugrundeliegende biometrische Eigenschaft ausschließlich der berechtigten Person bekannt ist und insbesondere nicht unverschlüsselt übertragen wird.

Zusätzlich zu dem biometrisch verschlüsselten Geheimnis wird im Zuge der erfindungsgemäßen Registrierung mittels einer sogenannten Hash-Funktion ein Referenz-Hash-Wert des Geheimnisses berechnet und ebenfalls für die Person registriert. Hash-Funktionen sind spezielle Einwegfunktionen *h(x)*=*y,* bei denen es praktisch unmöglich ist, aus einem gegebenen Funktionswert *y* das zugehörige Argument *x* zu rekonstruieren. Damit sie für kryptographische Zwecke nutzbar sind, müssen sie zudem "kollisionsfrei" sein, d. h. die Wahrscheinlichkeit, daß ein Paar von Argumenten *x, x'* auf denselben Hash-Wert *h(x)*=*h(x')* abgebildet wird, muß (nahezu) 0 sein. Der Hash-Wert des Geheimnisses ist dem Geheimnis also eineindeutig zugeordnet, während das Geheimnis aus dem Hash-Wert nicht rekonstruiert werden kann. Aufgrund dieser Eigenschaften können Hash-Werte ebenso risikolos über einen Kanal übertragen werden wie das biometrisch verschlüsselte Geheimnis, ohne die Entschlüsselung des Geheimnisses befürchten zu müssen.

Mit der sicheren Speicherung des biometrisch verschlüsselten Geheimnisses und des aus dem Geheimnis berechneten Referenz-Hash-Wertes ist die Registrierung der Person abgeschlossen.

Zur erfindungsgemäßen Authentisierung einer registrierten Person, beispielsweise an einem lokalen Authentisierungsterminal, das mit einer Datenbank verbunden ist, die alle registrierten Datensätze speichert, wird zunächst die gleiche biometrische Eigenschaft digitalisiert aufgenommen, die bereits bei der Registrierung zur Verschlüsselung verwendet wurde. Aus dieser wird mittels der bereits bei der Registrierung verwendeten Methoden ein Merkmalsvektor berechnet, das der Person zugehörige registrierte biometrische Geheimnis angefordert und mit dem Merkmalsvektor entschlüsselt. Von dem auf diese Weise entschlüsselten Geheimnis wird schließlich der Hash-Wert berechnet, wozu dieselbe Hash-Funktion verwendet wird, mit der bei der Registrierung bereits der Referenz-Hash-Wert berechnet wurde. Schließlich wird dieser Hash-Wert mit dem Referenz-Hash-Wert verglichen. Bei einer Identität der beiden Hash-Werte gilt die betreffende Person als korrekt authentisiert.

Die beschriebenen erfindungsgemäßen Registrierungs- und Authentisierungsverfahren ermöglichen vorteilhaft die zentrale Speicherung der Registrierungsdaten (des biometrisch verschlüsselten Geheimnisses und des Referenz-Hash-Wertes) und deren sichere Übertragung über Kommunikationsnetze zu und von lokalen Registrierungs- und Authentisierungsterminals, da Hash-Werte prinzipiell nicht entschlüsselbar sind und für die Entschlüsselung des biometrisch verschlüsselten Geheimnisses der biometrische Schlüssel bekannt sein muß. Dieser Schlüssel - der Merkmalsvektor -, bzw. die ihm zugrundeliegende biometrische Eigenschaft wird jedoch an keiner Stelle unverschlüsselt abgelegt oder gespeichert und ist somit besonders vorteilhaft vor Angriffen von Dritten geschützt. Weder auf das Geheimnis noch auf die biometrische Eigenschaft kann aus den zwischen einem Terminal und dem zentralen Datenbank-Server übertragenen und somit potentiell abhörbaren Daten rückgeschlossen werden. Darüberhinaus wird die Authentisierung einer Person nur mittels ihrer biometrischen Eigenschaften und ohne die Verwendung spezieller, zusätzlicher digitaler Datenträger wie Chipkarten oder Smart-Cards ermöglicht.

Bei einer ersten vorteilhaften Ausführungsform wird die obige Erfindung eingesetzt, um Personen das bargeldlose Bezahlen von Waren und Dienstleistungen zu ermöglichen, ohne daß sie hierfür spezielle Chipkarten benötigen, wie z. B. Eurocheck- oder Kreditkarten. Hierzu werden erfindungsgemäße Registrierungsvorrichtungen zum Registrieren von Person, beispielsweise spezielle Registrierungsterminals in Bankfilialen oder bei Dienstleistungsanbietern eingerichtet. Zur Erzeugung eines individuellen Geheimnisses für eine Person ist in der Registrierungsvorrichtung ein Zufallsgenerator vorgesehen. Alternativ hierzu kann eine Person ihr Geheimnis auch selbst wählen. Hierzu wird dann eine geeignete Eingabeeinrichtung zum Eingeben des Geheimnisses benötigt, z. B. eine Tastatur oder ein Touch-Screen.

Ferner besitzt die Registrierungsvorrichtung eine Scan-Einrichtung, um eine geeignete biometrische Eigenschaft der Person aufnehmen und digitalisieren zu können. Eine Recheneinrichtung des lokalen Registrierungsterminals extrahiert aus der digitalisierten biometrischen Eigenschaft einen Merkmalsvektor als biometrischen Schlüssel, mit dem das persönliche Geheimnis verschlüsselt wird.

Bei einer ersten Variante kann die Registrierung nur direkt bei einer zentralen Registrierungsstelle vorgenommen werden, die die registrierten Daten (das biometrisch verschlüsselte Geheimnis und den Referenz-Hash-Wert) ohne weitere Übertragung über Kommunikationsnetze an Ort und Stelle in einem Register oder Speicher ablegt.

Bei einer zweiten, für die Praxis relevanteren und deshalb besonders vorteilhaften Variante kann die Registrierung im Rahmen einer Client-Server-Architektur auch an einem lokalen Registrierungsterminal, z. B. in BankFilialen oder den diesen Service anbietenden Geschäften und Einrichtungen, vorgenommen werden. Derartige Registrierungsterminals besitzen eine Kommunikationsverbindung zu einer zentralen Speichereinrichtung - dem Datenbank-Server -, um die zu registrierenden Daten an den Server übertragen zu können. Prinzipiell kann das verschlüsselte Geheimnis und der Referenz-Hash-Wert in getrennten Registern abgelegt werden (die möglicherweise sogar in unterschiedlichen Datenbanken abgelegt sind) oder durch Ablegen in einem gemeinsamen Register auf dem Datenbank-Server registriert werden. Da das Geheimnis dabei einerseits biometrisch verschlüsselt und andererseits als Referenz-Hash-Wert übertragen wird, ist eine sichere Kommunikation zwischen dem lokalen Registrierungsterminal und dem zentralen Datenbank-Server sichergestellt. Mit der sicheren Speicherung ist die Registrierung der Person abgeschlossen.

Da zur Identifikation verwendbare biometrische Eigenschaften höchst komplexe und nicht notwendigerweise vollständig zeitinvariante Muster repräsentieren, die zudem bei jeder Verwendung leicht verändert aufgenommen werden können, sind auch die aus ihnen extrahierten Merkmale (als Komponenten des Merkmalsvektors) in gewissen Grenzen variabel und deshalb oft nicht ohne weiteres zum Ver- und Entschlüsseln wichtiger Daten geeignet. Diese leichte Varianz der numerischen Merkmale kann jedoch in einer vorteilhaften Ausgestaltung der Erfindung ausgeglichen werden, indem das Geheimnis bei der Registrierung der Person an einem erfindungsgemäßen Registrierungsterminal vor der Verschlüsselung fehlertolerant kodiert wird, z. B. durch eine Hamming-Kodierung. Diese Kodierung fügt der Information des zu kodierenden Geheimnisses (den sogenannten Nachrichtenbits) redundante Information (sogenannte Kontrollbits) bei.

Im Falle einer fehlerhaften Entschlüsselung des kodierten, verschlüsselten Geheimnisses aufgrund leicht abweichender Merkmalsvektoren sind diese Fehler in den Kontrollbits kodiert und werden bei der Dekodierung des zu diesem Zeitpunkt zwar entschlüsselten aber noch kodierten Geheimnisses kompensiert. Der Grad der Fehlerkorrektur kann dabei über die verwendete Kodierung (bzw. die Redundanz) frei gewählt werden, so daß mittelbar die erlaubte Abweichung der beiden Aufnahmen der biometrischen Eigenschaft und der resultierenden Merkmalsvektoren eingestellt werden kann.

Bei dieser ersten Ausführungsform der Erfindung kann sich jede registrierte Person, beispielsweise zum bargeldlosen Bezahlen ohne Chip-Karte, an einem Authentisierungsterminal authentisieren, das z. B. in Geschäften als eigenständiger Geldautomat oder als Teil der vorhandenen Kassenanlage installiert sein kann. Dazu wird an dem Authentisierungsterminal durch eine entsprechende Aufnahme- und Digitalisierungseinrichtung zunächst die gleiche biometrische Eigenschaft digitalisiert aufgenommen, die bereits bei der Registrierung zur Verschlüsselung verwendet wurde. Das der Person zugehörige biometrisch verschlüsselte Geheimnis wird bei dem Datenbank-Server angefordert und von einer speziellen Kommunikationseinrichtung des lokalen Authentisierungsterminals empfangen. Aus dieser wird dann von der Recheneinrichtung des Authentisierungsterminals mittels der bereits bei der Registrierung verwendeten Extraktionsalgorithmen ein Merkmalsvektor extrahiert, mit dem das vom Server empfangene biometrisch verschlüsselte Geheimnis lokal entschlüsselt wird und - falls es bei der Registrierung fehlertolerant kodiert wurde - zusätzlich fehlerkorrigierend dekodiert.

Schließlich berechnet die Recheneinrichtung des Authentisierungsterminals den Hash-Wert des entschlüsselten und dekodierten Geheimnisses, fordert den bei der Registrierung gebildeten Referenz-Hash-Wert vom Datenbank-Server an und vergleicht diese beiden Werte. Bei einer Identität der beiden Hash-Werte gilt die betreffende Person als korrekt authentisiert. Damit ist die Authentisierung der Person abgeschlossen, und die bargeldlose Bezahlung durch entsprechende Transaktionen des Authentisierungsterminals oder einer damit verbundenen Einrichtung kann durchgeführt werden.

In einer besonders vorteilhaften Ausgestaltung der Erfindung können Registrierungs- und Authentisierungsterminals in eine bauliche Einheit zusammengeführt werden und einige Komponenten gemeinsam benutzen, z. B. die Aufnahme- und Digitalisierungseinrichtung, die Recheneinrichtung oder auch die Kommunikationsmittel zum Datenaustausch mit dem Datenbank-Server.

Das beschriebene Authentisierungsverfahren ermöglicht vorteilhaft die Authentisierung einer Person nur mittels ihrer biometrischen Eigenschaften und ohne zusätzliche Hilfsmittel wie Chipkarten oder Smart-Cards. Die zentrale Speicherung und die damit zusammenhängende Übertragung der Registrierungsdaten ist durch die biometrische Verschlüsselung und die Hash-Wert-Bildung ausreichend sicher, da Hash-Werte prinzipiell nicht entschlüsselbar sind und für die Entschlüsselung des biometrisch verschlüsselten Geheimnisses der biometrische Schlüssel bekannt sein muß. Dieser Schlüssel - der Merkmalsvektor-, bzw. die ihm zugrundeliegende biometrische Eigenschaft wird jedoch an keiner Stelle unverschlüsselt abgelegt oder gespeichert und ist somit besonders vorteilhaft vor Angriffen von Dritten geschützt. Weder auf das Geheimnis noch auf die biometrische Eigenschaft kann aus den zwischen einem Terminal und dem zentralen Datenbank-Server übertragenen und somit potentiell abhörbaren Daten rückgeschlossen werden.

Bei einer Abwandlung dieser ersten Ausführungsform wird nicht der Referenz-Hash-Wert vom Datenbank-Server an das Authentisierungsterminal übertragen, sondern es wird umgekehrt der vom Authentisierungsterminal berechnete Hash-Wert an den Datenbank-Server übertragen und der Vergleich des errechneten Hash-Wertes auf dem Datenbank-Server mit dem dort registrierten Referenz-Hash-Wert von einer dafür vorgesehenen Recheneinrichtung durchgeführt. Das Ergebnis des Vergleichs, also die Zulassung oder Verweigerung der von der Peson initiierten Transaktion, wird abschließend an die lokale Authentisierungseinrichtung gemeldet. Diese Abwandlung ermöglicht es, einen etwaigen Vergleich eines von der Authentisierungseinrichtung erzeugten Hash-Wertes mit einer Vielzahl von zentral gespeicherten Referenz-Hash-Werten von dem Server durchführen zu lassen. Durch das lediglich einmalige Senden des Hash-Wertes zum Datenbank-Server wird die Kommunikationslast gegenüber dem umgekehrten Fall reduziert, bei dem der Vergleich vom Authentisierungsterminal durch geführt wird und demzufolge alle Referenz-Hash-Werte vom zentralen Datenbank-Server angefordert werden müssen.

Gemäß einer zweiten bevorzugten Ausführungsform der Erfindung wird die Beantragung und Erteilung von zentral verwalteten und begrenzten Ressourcen automatisch kontrolliert. Dabei handelt es sich z. B. um staatliche oder kommunale Leistungen, wie Visa oder Sozialleistungen, oder auch um beschränkte Leistungen privater Dienstleister, beispielsweise im Mobilfunkbereich. Bei dieser zweiten Ausführungsform wird für eine zu vergebende Leistung eine zentrale Datenbank eingerichtet, in der die biometrischen Registrierungsdaten, also das biometrisch verschlüsselte Geheimnis und der zugehörige Referenz-Hash-Wert, aller Personen gespeichert werden, die die betreffende Leistung bereits mindestens einmal empfangen haben. Das zur Generierung dieser Registrierungsdaten benötigte Geheimnis wird gleichzeitig mit der ersten Leistungsbeantragung von der Registrierungseinrichtung als zufällige Zahlen- oder Zeichenkombination erzeugt und die Registrierungsdaten werden ebenfalls bei der ersten Leistungsbeantragung berechnet und in der zentralen Datenbank hinterlegt. Auch bei dieser Ausführungsform bietet sich ein Client-Server-Modell an, bei dem ein zentraler Datenbank-Server mit lokalen Authentisierungs- und Registrierungsterminals kommuniziert.

Falls nun eine Person eine Leistung beantragt, wird überprüft, ob sich die biometrischen Registrierungsdaten dieser Person bereits auf dem Datenbank-Server befinden. Falls dies nicht der Fall ist, wird ihre Registrierung - wie beschrieben - vorgenommen und die Leistung bewilligt. Andernfalls wird der Antrag der Person abgelehnt. Bei dieser Ausführungsform ist die Unterscheidung zwischen Registrierung und Authentisierung für eine Person nicht ersichtlich. Deshalb ist es in einer vorteilhaften Ausgestaltung sinnvoll, gemeinsame Registrierungs- und Authentisierungsterminals bzw. Clients vorzusehen.

Wenn eine Person an einem derartigen Terminal eine Leistung beantragt, wird zunächst ihre biometrische Eigenschaft digital aufgezeichnet und ein entsprechender Merkmalsvektor daraus extrahiert. Mit dem Merkmalsvektor werden alle registrierten, biometrisch verschlüsselten Geheimnisse nacheinander entschlüsselt, die entsprechenden Hash-Werte daraus gebildet und diese mit den den jeweiligen biometrisch verschlüsselten Geheimnissen zugeordneten Referenz-Hash-Werten verglichen. Dieser Prozeß wird solange durchgeführt, bis entweder eine Übereinstimmung des individuellen Hash-Wertes mit einem der Referenz-Hash-Werte festgestellt wird oder alle Referenz-Hash-Werte erfolglos überprüft wurden. Im letzteren Fall hat sich die Person, da sie die Leistung bisher noch nicht in Anspruch genommen hat, als berechtigt authentisiert und ihre Daten werden in die Datenbank übernommen und dadurch registriert. Die Authentisierung einer Peson ist bei dieser Ausführungsform also gerade dann möglich, wenn sie noch nicht registriert ist.

Da eine Übertragung von Hash-Werten prinzipiell sicher ist, kann der Vergleich der errechneten Hash-Werte mit den jeweiligen Referenz-Hash-Werten dann entweder von dem Terminal oder vom Server durchgeführt werden. Im zweitgenannten Fall werden die vom Terminal errechneten und an die Datenbank übertragenen Hash-Werte mit den entsprechenden Referenz-Hash-Werten verglichen und entweder werden alle Vergleichsergebnisse wieder an das Terminal gesendet oder es wird nur bei übereinstimmenden Werten eine Bestätigung an das Terminal geschickt.

Bei dem Einsatz von lokalen Terminals ist es aus Sicherheitsgründen sinnvoll, weder das unverschlüsselte digitale Bild der biometrischen Eigenschaft noch den Merkmalsvektor von einem Authentisierungs-/ Registrierungsterminal an den Datenbank-Server zu übertragen, sondern umgekehrt die bereits registrierten, biometrisch verschlüsselten Geheimnisse und deren zugehörige Referenz-Hash-Werte vom Server an das lokale Terminal zur dortigen Überprüfung zu schicken.

Um den dadurch entstehenden Datentransfer auf ein Minimum zu reduzieren, kann bei einer vorteilhaften Ausgestaltung dieser zweiten Ausführungsform von dem Datenbank-Server eine Vorauswahl der relevanten und potentiell zu berücksichtigenden Datensätze durch eine Vorsortierung dieser Datensätze anhand bestimmter charakteristischer und eindeutig reproduzierbarer Auswahlmerkmale der zugrundeliegenden biometrischen Eigenschaft vorgenommen werden.

So ist beispielsweise bei der Verwendung des Irismusters als biometrische Eigenschaft die Augenfarbe in der Regel eindeutig reproduzierbar und einer von wenigen Auswahlklassen (z. B. blau, braun, grün) zweifelsfrei zuzuordnen. Gemäß der verschiedenen Werte dieses Auswahlmerkmals - die nicht notwendigerweise numerisch sein müssen, sondern, wie z. B. bei der Augenfarbe, auch symbolisch sein können - werden die Datensätze durch Abspeichern (Registrieren) des Auswahlmerkmals - entweder in einem separaten Register oder in einem gemeinsamen Register zusammen mit den Registrierungsdaten - in Auswahlklassen eingeteilt und dadurch vorsortiert.

Bei einer Authentisierung wird dann der Wert des betreffenden Auswahlmerkmals aus der digitalisierten biometrischen Eigenschaft ermittelt und an den Datenbank-Server geschickt. Dieser wählt daraufhin zur Überprüfung nur diejenigen Datensätze aus, deren assoziiertes Auswahlmerkmal dem ermittelten Wert entspricht, und sendet nur diese an das Terminal zur Überprüfung zurück.

Auf diese Weise wird die Auswahl der für eine Überprüfung relevanten Datensätze vorteilhaft eingeschränkt und der Vorgang beschleunigt. Natürlich können bei weiteren Varianten die Datensätze auch anhand mehrerer numerischer oder symbolischer Auswahlmerkmale vorsortiert bzw. strukturiert und die jeweils relevanten Datensätze dadurch weiter eingeschränkt werden. Sie können beispielsweise in Form einer hierarchischen Datenstruktur organisiert werden, die in einer relationalen Datenbank gemeinsam mit weiteren personenbezogenen Daten abgelegt sind. Prinzipiell können die Auswahlmerkmale auch mit einigen der numerischen Merkmale des zur Entschlüsselung verwendeten Merkmalsvektors übereinstimmen.

Die Vorsortierung relevanter Datensätze auf dem Datenbank-Server anhand bestimmter charakteristischer und eindeutig reproduzierbarer Auswahlmerkmale der zugrundeliegenden biometrischen Eigenschaft ist im gleichen Maße sinnvoll, um bei der vorbeschriebenen ersten Ausführungsform das Auffinden der registrierten Daten einer sich authentisierenden Person zu ermögliche bzw. zu beschleunigen.

In manchen Fällen, insbesondere bei kommunalen oder ortsgebundenen Leistungen, kann es auch sinnvoll sein bei dieser zweiten Ausführungsform vom Client-Server-Modell abzusehen und das gemeinsame Registrierungs- und Authentisierungsterminal mit einer integrierten Datenbank auszustatten, um dadurch jeglichen Datentransfer zu unterbinden und dadurch eine hohe Sicherheit herzustellen.

Prinzipiell können neben der beschriebenen Speicherung der Registrierungsdaten in einer zentralen Datenbank viele weitere Speichertechniken eingesetzt werden. Eine dritte erfindungsgemäße Ausführungsform sieht beispielsweise die Speicherung durch Aufbringen der Daten auf Dokumenten und sonstigen Schriftstücken vor. Dieses Prinzip der Registrierung und Authentisierung wird vorteilhaft zur biometrischen Identifikation von Personen eingesetzt, beispielsweise bei Grenz- oder sonstigen Ausweiskontrollen.

Dazu wird das biometrisch verschlüsselte Geheimnis und der zugehörige Referenz-Hash-Wert nicht von einem zentralen Datenbank-Server gespeichert, sondert auf ein Ausweisdokument, beispielsweise auf den Personalausweis, Reisepaß, Führerschein oder Dienstausweis einer Person, gedruckt oder gestanzt oder auf eine beliebige andere Weise hinterlegt. Derartige Dokumente werden typischerweise von zentralen staatlichen oder auch staatlicherseits dazu legitimierten privaten Stellen ausgefertigt. Entsprechende Registrierungseinrichtungen zumindest zum Aufnehmen und Digitalisieren der benötigten biometrischen Eigenschaft können z. B. an den diese Dokumente ausgebenden Stellen eingerichtet werden. Eine Kommunikation mit einer zentralen Stelle ist bei dieser Ausführungsform nicht notwendig, da die biometrischen Daten nicht zentral gespeichert werden sondern eine Person allein durch das Aufbringen der Daten auf die entsprechenden Dokumente registriert wird.

Dementsprechend kann die spätere Authentisierung einer derart registrierten Person an einem lokalen Authentisierungsterminal erfolgen, ohne daß eine Datenfernübertragung bzw. die hierfür benötigten technischen Voraussetzungen bereitgestellt werden müssen. Die Authentisierung erfolgt bei dieser Ausführungsform also nur durch die biometrische Eigenschaft der Person und ein übliches Ausweisdokument, das die Person ohnehin mit sich führt, bzw. sogar dazu verpflicht ist es mitzuführen. Zusätzliche digitale Datenträger wie z. B. Chip-Karten, Smart-Cards, oder optische Medien werden zur Authentisierung nicht benötigt.

Ein entsprechendes Authentisierungsterminal besitzt Einrichtungen zum Aufnehmen und Digitalisieren der biometrischen Eigenschaft und zum Lesen und Erkennen der Registrierungsdaten von dem Dokument. Eine Recheneinrichtung wird dann das biometrisch verschlüsselte Geheimnis entschlüsseln, dessen Hash-Wert berechnen und mit dem von dem Dokument gelesenen Referenz-Hash-Wert vergleichen. Bei Übereinstimmung hat sich die Person als die auf dem Dokument genannten Person ausgewiesen.

Auf die gleiche Art und Weise können andere wichtige Dokumente, z. B. Wertdokumente wie Urkunden, persönliche Dokumente, Aktien und dergleichen, durch irreversibles Aufbringen der Registrierungsdaten einer oder mehrerer Personen personalisiert werden und deren authentisierte Besitzerschaft von einer Authentisierungseinrichtung zweifelsfrei nachgewiesen werden.

Die Vorteile dieser Ausführungsform liegen darin, daß individuelle biometrische Daten fälschungssicher und maschinenlesbar auf Ausweis- und Wertdokumenten hinterlegt werden können und diese Personen dadurch zweifelsfrei und auf einfache Weise identifizierbar sind. Aus den prinzipiell öffentlich zugänglichen, auf dem Dokument angebrachten Daten kann weder auf das im Referenz-Hash-Wert enthaltene Geheimnis noch auf die biometrische Information oder den Schlüssel rückgeschlossen werden.

Weitere Merkmale und Vorteile der Erfindung ergeben sich aus der folgenden Beschreibung verschiedener erfindungsgemäßer Ausführungsbeispiele und Ausführungsalternativen. Es wird auf die Figuren verwiesen, die zeigen:
Figur 1 ein Ausführungsbeispiel eines erfindungsgemäßen Verfahrens zum bargeld- und kartenlosen Bezahlen,
Figur 2 ein Ausführungsbeispiel eines erfindungsgemäßen Systems zur Kontrolle von Mehrfachbeantragungen begrenzter Leistungen und
Figur 3 ein Ausführungsbeispiel eines erfindungsgemäßen Systems zum Identifizieren von Personen.

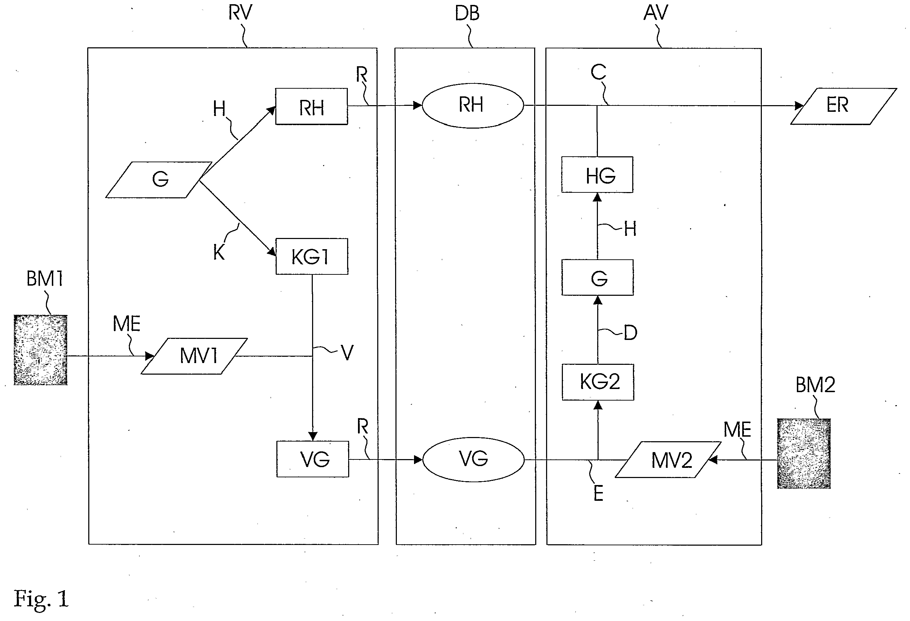

Figur 1 illustriert schematisch den Informationsfluß bei einem erfindungsgemäßen Registrierungs- und Authentisierungsverfahren, realisiert durch ein Client-Server-System, zum bargeldlosen und kartenlosen Bezahlen durch biometrische Authentisierung. Bei diesem Ausführungsbeispiel kommunizieren zwei Clients, die Registrierungsvorrichtung RV und die Authentisierungsvorrichtung AV, mit einem Datenbank-Server DB. Eine Person kann sich an dem System über die Registrierungsvorrichtung RV durch Abgabe einer biometrischen Eigenschaft BM1, hier ihres Fingerabdrucks, anmelden. Daraus werden Registrierungsdaten RH, VG für die Person berechnet, die auf dem zentralen Datenbank-Server DB gespeichert werden. Bei jeder Authentisierung der Person werden die Registrierungsdaten RH, VG von dem Datenbank-Server DB an das lokale Authentisierungsterminal AV zur Überprüfung übertragen.

Bei der Registrierung der Person wird zunächst ihr Fingerabdruck aufgenommen und liegt in Form des digitalen Bildes BM1 zur Merkmalsextraktion ME bereit. Durch die Merkmalsextraktion ME werden bestimmte, möglichst individuelle Charakteristika der biometrischen Eigenschaft BM1 durch numerische Werte ausgedrückt, die als Merkmalsvektor MV1 die diskriminative Information der biometrischen Eigenschaft BM1 repräsentieren. Der Merkmalsvektor MV1 wird im weiteren Verlauf des Registrierungsprozesses als Schlüssel einer biometrischen Verschlüsselung V verwendet.

Der Merkmalsvektor MV1 soll die biometrische Eigenschaft BM1 einerseits hinreichend genau beschreiben und muß andererseits weitestgehend reproduzierbar sein, d. h. eine erneute Merkmalsextraktion ME muß zumindest ähnliche Merkmalswerte erzeugen. Deshalb werden Algorithmen zur Merkmalsextraktion ME verwendet, die entsprechend robuste Merkmale erzeugen (z. B. Filterantworten, Spektralkoeffizienten, Momente, Verteilungsparameter, Formfaktoren, etc.) und die bezüglich der obligatorischen natürlichen Abweichungen einer biometrischen Quelle eine möglichst geringe (Interklassen-) Varianz besitzen und bei unterschiedlichen biometrischen Quellen gleichzeitig eine möglichst hohe (Intraklassen-) Varianz aufweisen und demzufolge hinreichend diskriminativ sind.

Neben dem Merkmalsvektor MV1 wird als zweites personenindividuelles Datum mittels eines Zufallsgenerators ein Geheimnis G generiert. Dieses Geheimnis bleibt selbst der Person, der es zugeordnet ist, unbekannt. Deshalb kann es, im Gegensatz zu herkömmlichen PINs und Kennworten, aus einer komplexen, nicht ohne weiteres merkbaren Zeichenfolge bestehen.

Da die nachfolgende biometrische Verschlüsselung V des Geheimnisses G mit dem Merkmalsvektor MV1 aufgrund der natürlichen Unschärfe biometrischer Eigenschaften BM1 beim Authentisierungsprozeß nicht eindeutig rückgängig gemacht werden kann, wird das Geheimnis G vor der Verschlüsselung V durch eine fehlertolerante Kodierung K in ein kodiertes Geheimnis KG1 transformiert. Das kodierte Geheimnis KG1 unterscheidet sich vom unkodierten Geheimnis G durch eine bestimmte Anzahl zusätzlicher redundanter Bits, die biometriebedingte Entschlüsselungsfehler in bestimmtem Umfang zu korrigieren vermögen.

Die auf dem Datenbank-Server DB zu speichernden Registrierungsdaten VG, RH werden schließlich von dem Registrierungsterminal RV durch eine Verschlüsselung V des kodierten Geheimnisses KG1 in ein verschlüsseltes Geheimnis VG und durch die Bildung H eines Referenz-Hash-Wertes RH aus dem unverschlüsselten Geheimnis G erzeugt; Mit der Übertragung R der Registrierungsdaten VG, RH an den Datenbank-Server DB und der dortigen Speicherung der Daten VG, RH ist der Registrierungsprozeß abgeschlossen.

Bei der Authentisierung der Person mittels des Authentisierungsterminals AV wird der Fingerabdruck der Person erneut aufgenommen und liegt nun in Form eines digitalen Bildes BM2 vor, das sich aufgrund vielerlei technischer und bio-physiologischer Einflüsse von dem bei der Registrierung aufgenommenen Bild BM1≈BM2 leicht unterscheidet. Die Gründe hierfür liegen in der grundsätzlichen Unschärfe biometrischer Messungen, sowie in veränderlichen Aufnahmebedingungen. Dementsprechend liefert die anschließende Merkmalsextraktion ME auch einen Merkmalsvektor MV2, der leicht von dem zum Verschlüsseln verwendeten Merkmalsvektor MV1≈MV2 abweicht. Aus diesem Grunde weicht nach der Entschlüsselung E des verschlüsselten Geheimnisses VG auch das Ergebnis, also das zwar entschlüsselte aber immer noch kodierte Geheimnis KG2, von seinem Pendant, dem bei der Registrierung generierten kodierten Geheimnis KG1≈KG2, leicht ab. Dieser leichte Abweichungsfehler wird nun im nächsten Schritt, dem fehlerkorrigierenden Dekodieren D des kodierten Geheimnisses KG2, korrigiert und führt zu dem nunmehr unverschlüsselten Geheimnis G. Mit Hilfe der Kodierung K bzw. der Dekodierung D wird also die obligatorische biometrische Meßunschärfe biometrischer Merkmal BM1, BM2 kompensiert, sofern diese in einem bei der Kodierung einstellbaren Rahmen bleibt. Abweichungen, die über die Korrekturkapazität der fehlertoleranten (De-) Kodierung K/D hinausgehen, also insbesondere die grundsätzlich unterschiedlichen biometrischen Eigenschaften verschiedener Personen, werden nicht kompensiert und führen zum Scheitern der Authentisierung.

Das auf diese Weise entschlüsselte Geheimnis G wird sofort wieder durch die Hash-Wert-Bildung H in den Hash-Wert HG transformiert. Dieser wird abschließend anhand eines Vergleiches C mit dem von dem Datenbank-Server DB angeforderten Referenz-Hash-Wert RH verglichen und das Ergebnis ER des Vergleichs C beispielsweise über einen Bildschirm mitgeteilt bzw. intern weiter verarbeitet. Falls die beiden Hash-Werte RH und HG identisch sind, hat sich die betreffende Person korrekt authentisiert. Bei unterschiedlichen Werten bleibt ihr der elektronische Zugang zu einem Konto zum bargeldlosen Bezahlen verwehrt.

Dieses Ausführungsbeispiel realisiert somit die sichere Registrierung und Authentisierung einer Person an einem System zum elektronischen Bezahlen nur aufgrund persönlicher biometrischer Daten BM1, BM2. Ein weiteres digitales Speichermedium, z. B. eine Chip-Karte wird hierfür nicht benötigt. Der Transfer von Daten zum/vom Datenbank-Server DB ist ausreichend sicher, da einerseits dem Referenz-Hash-Wert RH aufgrund der Einweg-Eigenschaft der verwendeten Hash-Funktion H das Geheimnis G nicht zu entnehmen ist. Andererseits ist das verschlüsselte Geheimnis VG nur bei Kenntnis der biometrischen Eigenschaft BM1, BM2 zu entschlüsseln, die jedoch an keiner Stelle und zu keinem Zeitpunkt auf einem Permanentspeicher niedergelegt wird.

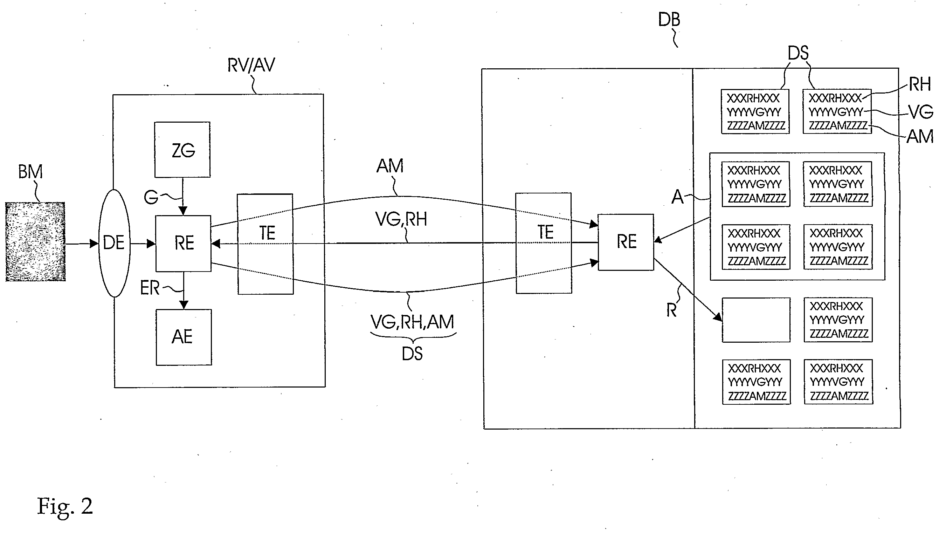

Figur 2 zeigt ein weiteres Ausführungsbeispiel der Erfindung. Das dort abgebildete System kontrolliert die Beantragung und Gewährung von Leistungen und Ressourcen, die einer Person nur einmal zustehen und verhindert die unberechtigte Doppelbeantragung derartiger Leistungen.

Da die Trennung zwischen der Registrierung und der Authentisierung bei diesem Ausführungsbeispiel in der bisher beschriebenen Art und Weise nicht zweckmäßig ist, wird ein kombiniertes Registrierungs- und Authentisierungsterminal RV/AV verwendet, das mit einem zentralen Datenbank-Server DB kommuniziert und über die jeweiligen Transfereinrichtungen TE die Registrierungsdaten VG, RH austauscht.

Eine Person beantragt zunächst eine Leistung durch die Abgabe einer biometrischen Eigenschaft BM, die von einer Digitalisierungseinrichtung DE des Terminals RV/AV aufgenommen und in Form eines digitalen Bildes der Recheneinrichtung RE zur Extraktion des zugehörigen Merkmalsvektors zur Verfügung gestellt wird.

Um die Berechtigung der Person festzustellen, muß zunächst überprüft werden, ob für diese Person bereits Registrierungsdaten VG, RH auf dem Datenbank-Server DB gespeichert sind. Falls dies der Fall ist, hat die Person die betreffende Leistung bereits einmal empfangen und eine weitere Inanspruchnahme ist nicht möglich. Andernfalls wird die Leistung gewährt und die Registrierungsdaten VG, RH der Person werden von der Recheneinrichtung RE generiert und von dem Datenbank-Server DB gespeichert bzw. registriert.

Zur Überprüfung des Vorhandenseins von Registrierungsdaten VG, RH für die betreffende Person müssen die auf dem Datenbank-Server DB vorhandenen verschlüsselten Geheimnisse VG der Reihe nach mit dem Merkmalsvektor der Person entschlüsselt werden, aus dem entschlüsselten Geheimnis G ein Hash-Wert berechnet und dieser Hash-Wert mit dem dem verschlüsselten Geheimnis VG zugeordneten Referenz-Hash-Wert RH verglichen werden.

Damit dieser Prozeß nicht für alle Registrierungsdaten VG, RH durchgeführt werden muß, sind die Registrierungsdaten VG, RH auf dem Datenbank-Server DB anhand des Wertes eines eindeutig zugeordneten Auswahlmerkmals AM vorsortiert. Das Auswahlmerkmal AM ist ein charakteristisches, numerisches oder symbolisches Merkmal der biometrischen Eigenschaft BM und ergibt sich eindeutig aus dieser. Bei der Leistungsbeantragung der Person muß also nur die Auswahl A derjenigen Registrierungsdaten VG, RH überprüft werden, deren zugeordnetes Auswahlmerkmal AM mit dem von der Recheneinrichtung RE berechneten Auswahlmerkmal AM der Person übereinstimmen. Für den Fall, daß als biometrische Eigenschaft BM das Irismuster einer Person verwendet wird, kann als (symbolisches) Auswahlmerkmal AM beispielsweise die daraus eindeutig berechenbare Augenfarbe der Person verwendet werden.

Nachdem für eine Person das Auswahlmerkmal AM aus deren biometrischer Eigenschaft BM extrahiert wurde, wird es über die Transfereinrichtung TE des Terminals RV/AV an den Datenbank-Server DB gesendet und von dessen Transfereinrichtung TE empfangen. Das Auswahlmerkmal AM kann dabei im Hinblick auf Datenschutz und Datenintegrität risikolos unverschlüsselt bleiben, da es keinerlei eindeutig zuzuordnende Information über die betreffende Person repräsentiert.

Die Recheneinrichtung RE des Datenbank-Servers DB wählt anschließend aus allen dort gespeicherten Datensätzen DS die Auswahl A derjenigen Datensätze DS aus, deren Auswahlmerkmal AM den gleichen Wert aufweist, wie das von dem Terminal RV/AV empfangene Auswahlmerkmal AM. Aus den Datensätzen DS dieser Auswahl A werden anschließend die entsprechenden Registrierungsdaten VG, RH (nicht jedoch das Auswahlmerkmal AM, da es nicht weiter benötigt wird) entnommen und über die Transfereinrichtungen TE an das Terminal RV/AV zur weiteren Überprüfung geschickt.

Die Recheneinrichtung RE des Terminals RV/AV entschlüsselt alle von dem Datenbank-Server DB empfangenen verschlüsselten Geheimnisse VG der Auswahl A mit dem bereits berechneten Merkmalsvektor, berechnet von dem daraus resultierenden Geheimnis G den Hash-Wert und vergleicht diesen mit dem dem jeweiligen verschlüsselten Geheimnis VG zugeordneten Referenz-Hash-Wert RH. Sobald hierbei eine Übereinstimmung zwischen einem Hash-Wert und einem Referenz-Hash-Wert RH festgestellt wird, wird der Authentisierungsprozeß abgebrochen und die beantragte Leistung verweigert, da sie offensichtlich bereits einmal empfangen wurde. Falls nach Überprüfung aller Registrierungsdaten VG, RH der Auswahl A keine derartige Übereinstimmung aufgetreten ist, wird die von der Person beantragte Leistung bewilligt. Das jeweilige Ergebnis ER der Überprüfung wird auf einer Anzeigeeinrichtung AE des Terminals RV/AV bekannt gegeben.

Im Anschluß an die Bewilligung einer Leistung muß die Person registriert werden, damit eine zweite, unberechtigte Bewilligung der gleichen Leistung ausgeschlossen wird. Hierzu wird von einem Zufallsgenerator ZG ein Geheimnis G als zufällige Zeichenfolge generiert, dieses von der Recheneinrichtung RE des Terminals RV/AV mit dem Merkmalsvektor biometrisch verschlüsselt und ein Referenz-Hash-Wert RH des Geheimnisses G errechnet. Zusammen mit dem bereits bei in der Authentisierungsphase errechneten Auswahlmerkmal AM wird schließlich das verschlüsselte Geheimnis VG und der Referenz-Hash-Wert RH zur Registrierung an den Datenbank-Server DB geschickt. Dieser neue Datensatz DS (VG, RH, AM) wird dort entsprechend dem Wert seines Auswahlmerkmals AM abgelegt und somit registriert.

In Abwandlungen dieses zweiten Ausführungsbeispiels ist es generell auch möglich, auf die gleiche Weise Leistungen zu verwalten, die eine Person mehrfach, aber in begrenzter Anzahl empfangen darf. Hierbei ist zumindest die Anzahl der Leistungsempfänge zusätzlich zu registrieren.

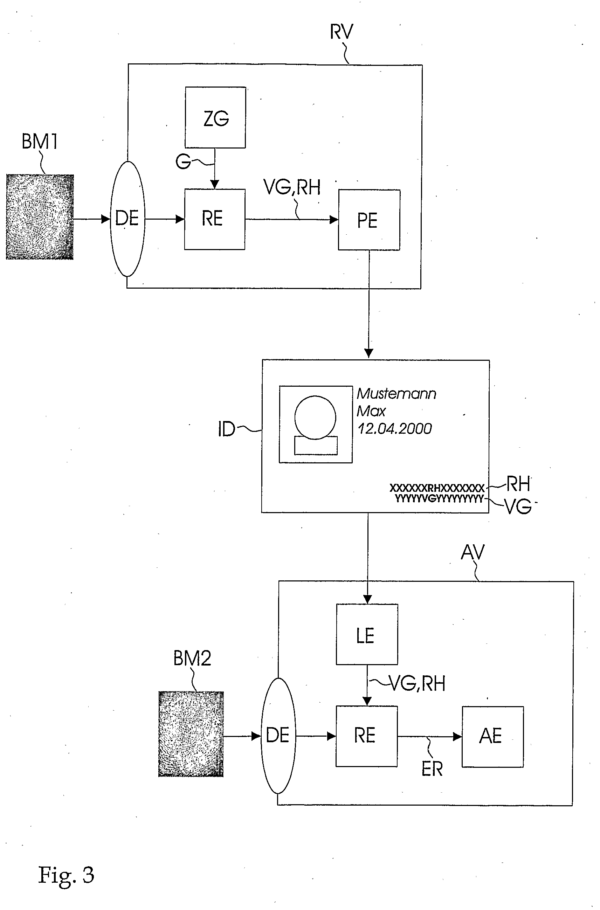

Figur 3 zeigt ein drittes Ausführungsbeispiel der Erfindung zur biometrischen Unterstützung von Personenidentifikationen bei Ausweiskontrollen beispielsweise im Grenz- oder Flugverkehr.

Die Registrierung wird an einem entsprechenden Registrierungsterminal RV vorgenommen, indem die biometrische Eigenschaft BM1 der Person mittels einer Digitalisierungseinrichtung DE, z. B. einer hochauflösenden CCD-Kamera, aufgezeichnet wird. Das dabei erzeugte digitale Bild sowie eine durch einen Zufallsgenerator ZG erzeugte Zufallszahl - das Geheimnis G - werden an die Recheneinrichtung RE des Registrierungsterminals RV weitergegeben. Diese berechnet aus der biometrischen Eigenschaft BM1 einen Merkmalsvektor, mit dem als biometrischem Schlüssel das Geheimnis G verschlüsselt wird. Es entsteht das zur Registrierung benötigte verschlüsselte Geheimnis VG. Ebenso bildet die Recheneinrichtung RE einen Hash-Wert des Geheimnisses G, der als Referenz-Hash-Wert RH zur Registrierung verwendet wird.

Der eigentliche Registrierungsprozeß wird von der Prägeeinrichtung PE des Registrierungsterminals RV durchgeführt, indem das verschlüsselte Geheimnis VG und der Referenz-Hash-Wert RH in maschinenlesbarer Form auf ein Ausweisdokument ID aufgebracht werden. Dies kann vorzugsweise durch Auf- oder Einprägen geschehen, aber auch durch Stanzen oder verschiedene Drucktechniken, sowie durch Speicherung auf einem Speicherchip, falls er in das Ausweisdokument ID integriert ist und sich nicht auf einem zusätzlichen digitalen Datenträger befindet.

Obwohl die Registrierungsdaten VG, RH auf dem Ausweisdokument ID sichtbar oder zumindest auslesbar und dadurch prinzipiell öffentlich sind, ist durch die biometrische Verschlüsselung bzw. die Hash-Wert-Bildung eine Entschlüsselung des Geheimnisses G oder der biometrischen Eigenschaft BM1 ausgeschlossen.

Die Authentisierung der Person, also der biometrische Nachweis, daß die Person, die das Ausweisdokument ID mit sich führt, mit der dort genannten Person identisch ist, wird an einem Authentisierungsterminal AV durchgeführt, das an entsprechenden Grenz- und Kontrollstellen eingerichtet ist oder vom Kontrollpersonal portabel mitgeführt werden kann.

Das Authentisierungsterminal verfügt über eine Leseeinrichtung LE, die die auf dem Ausweisdokument ID hinterlegten maschinenlesbaren Registrierungsdaten RH, VG scannt und in von der Recheneinrichtung RE weiterverarbeitbare digitale Daten VG, RH umsetzt. Die Recheneinrichtung RE erhält zusätzlich die digitalisierte biometrische Eigenschaft BM2, deren mögliche marginale Abweichung von der zur Registrierung verwendeten biometrischen Eigenschaft BM1 prinzipiell durch fehlerkorrigierende (De-) Kodierung ausgeglichen werden kann.

Die Recheneinrichtung RE des Authentisierungsterminals AV extrahiert einen Merkmalsvektor aus der digitalisierten biometrischen Eigenschaft BM2, entschlüsselt mit diesem das verschlüsselte Geheimnis VG und errechnet daraus einen Hash-Wert zum Vergleichen mit dem Referenz-Hash-Wert RH. Das Ergebnis ER des Vergleichs, also die Bestätigung oder Bezweiflung der Identität der ausweisführenden Person, wird der kontrollierenden Person abschließend auf einer Anzeigeeinrichtung mitgeteilt.

Sowohl die Recheneinheit RE des Registrierungsterminals RV als auch die Recheneinheit RE des Authentisierungsterminals AV können, in diesem wie in allen anderen Ausführungsbeispielen, spezialisierte Co-Prozessoren zum Extrahieren der Merkmalsvektoren und/oder zum Verschlüsseln des Geheimnisses G bzw. zur Hash-Wert-Bildung besitzen.

Dieses Ausführungsbeispiel ermöglicht die einfache und effektive Kodierung biometrischer Information und deren Verwendung auf Ausweisdokumenten ID und anderen Wertpapieren einer Person. Dabei werden neben dem Ausweisdokument ID keine zusätzlichen digitalen Datenträger, z. B. Chip-Karten, benötigt. Trotz des quasi öffentlichen Zugangs der Registrierungsdaten RH, VG kann weder auf das in ihnen enthaltene Geheimnis G noch auf die biometrische Information rückgeschlossen werden.

## Patentansprüche

1. Verfahren zum Authentisieren einer registrierten Person, umfassend die folgenden Schritte:
- Aufnehmen und Digitalisieren einer biometrischen Eigenschaft einer zu authentisierenden Person,
- Ermitteln (ME) eines biometrischen Schlüssels (MV2) aus der biometrischen Eigenschaft (BM; BM2) der Person,
- Entschlüsseln (E) eines verschlüsselten Geheimnisses (VG) mit dem ermittelten biometrischen Schlüssel (MV2),
- Berechnen (H) eines Hash-Wertes (HG) des entschlüsselten Geheimnisses (G),
- Vergleichen (C) des berechneten Hash-Wertes (HG) mit einem für die registrierte Person individuellen Referenz-Hash-Wert (RH),
- wobei der Schritt des Ermittelns (ME) des biometrischen Schlüssels (MV2) das Extrahieren (E) numerischer Merkmale aus der biometrischen Eigenschaft (BM; BM2) der Person umfasst,
wobei ein weiterer Schritt eines fehlertoleranten Dekodierens (D) des entschlüsselten Geheimnisses (KG2) vor dem Schritt des Berechnens (H) des Hash-Wertes (HG) stattfindet, und
wobei bei Übereinstimmung der beiden Hash-Werte die betreffende Person als korrekt authentisiert gilt, und
**gekennzeichnet dadurch, dass** die Schritte des Aufnehmens, des Ermittelns (EM), des Entschlüsselns (E), des Dekodierens (D) und des Berechnens (H) von einer lokalen Authentisierungsvorrichtung (AV) durchgeführt werden, wobei das verschlüsselte Geheimnis (VG) von einem zentralen Datenbank-Server (DB) an die lokale Authentisierungsvorrichtung (AV) übermittelt wird und der zentrale Datenbank-Server (DB) die biometrisch verschlüsselten Geheimnisse und die zugehörigen Referenz-Hash-Werte aller registrierten Personen speichert, und ferner
**gekennzeichnet dadurch, dass** eine Auswahl (A) von unterschiedlichen verschlüsselten Geheimnissen (VG) von jeweils verschiedenen registrierten Personen mit dem für die Person ermittelten biometrischen Schlüssel (MV2) entschlüsselt wird, zu jedem entschlüsselten Geheimnis (G) ein Hash-Wert (HG) berechnet wird und jeder dieser Hash-Werte (HG) mit einem individuellen Referenz-Hash-Wert (RH) der jeweils verschiedenen registrierten Personen verglichen wird,
wobei die Auswahl (A) von den unterschiedlichen verschlüsselten Geheimnissen (VG) anhand zumindest eines charakteristischen Auswahlmerkmals (AM) aus einer Vielzahl von verschlüsselten Geheimnissen (VG) ausgewählt wird und
wobei ein Auswahlmerkmal ein bestimmtes charakteristisches und eindeutig reproduzierbares Merkmal ist, das aus der biometrischen Eigenschaft durch die lokale Authentisierungsvorrichtung (AV) ermittelt und an den Datenbank-Server (DB) geschickt wird.

2. Verfahren nach Anspruch 1, **dadurch gekennzeichnet, daß** der Referenz-Hash-Wert (RH) von der zentralen Speichereinrichtung (DB) an die lokale Authentisierungsvorrichtung (AV) übermittelt wird und der Schritt des: Vergleichens (C) von der lokalen Authentisierungsvorrichtung (AV) durchgeführt wird.

3. Verfahren nach Anspruch 1, **dadurch gekennzeichnet, daß** der berechnete Hash-Wert (HG) an die zentrale Speichereinrichtung (DB) übermittelt wird und der Schritt des Vergleichens (C) von der zentralen Speichereinrichtung (DB) durchgeführt wird.

4. Verfahren zum Registrieren einer Person, umfassend die folgenden Schritte:
- Aufnehmen und Digitalisieren einer biometrischen Eigenschaft einer zu authentisierenden Person,
- Bereitstellen eines Geheimnisses (G),
- Ermitteln (ME) eines biometrischen Schlüssels (MV1) aus der biometrischen Eigenschaft (BM; BM1) der Person,
- Verschlüsseln (V) des Geheimnisses (G) mit dem ermittelten biometrischen Schlüssel (MV1),
- Registrieren (R) des verschlüsselten Geheimnisses (VG) für die Person,
- Berechnen (H) eines Referenz-Hash-Wertes (RH) des unverschlüsselten Geheimnisses (G),
- Registrieren (R) des Referenz-Hash-Wertes (RH) für die Person,
- wobei der Schritt des Ermittelns (ME) des biometrischen Schlüssels (MV1) das Extrahieren numerischer Merkmale aus der biometrischen Eigenschaft (BM; BM1) der Person umfaßt,
- wobei ein weiterer Schritt eines fehlertoleranten Kodierens (K) des Geheimnisses (G) vor dem Schritt des Verschlüsselns (V) stattfindet, **gekennzeichnet dadurch, daß** das Geheimnis (G) in Form einer individuellen Identifikationsnummer der Person bereitgestellt wird,
wobei sowohl der Schritt des Registrierens (R) des verschlüsselten Geheimnisses (VG) als auch der Schritt des Registrierens (R) des Referenz-Hash-Wertes (RH) durch das Speichern des verschlüsselten Geheimnisses (VG) und des Referenz-Hash-Wertes (RH) in einem zentralen Datenbank-Server (DB) erfolgt,
wobei das Verfahren von einer lokalen Registrierungsvorrichtung (RV) durchgeführt wird, wobei das verschlüsselte Geheimnis (VG) und der Referenz-Hash-Wert (RH) zur Registrierung (R) an den zentralen Datenbank-Server (DB) übertragen werden,
wobei zumindest ein bestimmtes charakteristisches und eindeutig reproduzierbares Auswahlmerkmal (AM) aus der biometrischen Eigenschaft (BM; BM1) der Person extrahiert und durch Speichern im zentralen Datenbank-Server (DB) mit dem entsprechenden verschlüsselten Geheimnis (VG) und dessen zugehörigem Referenz-Hash-Wert (RG) registriert wird, um eine Vorsortierung relevanter verschlüsselter Geheimnisse (VG) und deren zugehöriger Referenz-Hash-Werte (RH) auf dem Datenbank-Server zu erlauben.

5. Verfahren nach Anspruch 4, **dadurch gekennzeichnet, dass** das Geheimnis (G) in Form einer individuell erzeugten Zufallszahl bereitgestellt wird.

6. Registrierungs- und Authentisierungsverfahren, **dadurch gekennzeichnet, daß** das Registrieren mit einem Verfahren nach einem der Ansprüche 4 bis 5 und das Authentisieren mit einem Verfahren nach einem der Ansprüche 1 bis 3 durchgeführt wird.

7. Authentisierungsvorrichtung (AV) zum Authentisieren einer registrierten Person gemäß Anspruch 1, umfassend eine Digitalisierungseinrichtung (DE) zum Aufnehmen und Digitalisieren einer biometrischen Eigenschaft der zu authentisierenden Person, eine Recheneinrichtung (RE) zum Ermitteln eines biometrischen Schlüssels (MV2) aus der biometrischen Eigenschaft (BM; BM2) der Person und zum Entschlüsseln (E) eines für diese Person registrierten, verschlüsselten Geheimnisses (VG) mit dem ermittelten biometrischen Schlüssel (MV2), **dadurch gekennzeichnet, daß** die Recheneinrichtung (RE) eingerichtet ist, einen Hash-Wert (HG) des entschlüsselten Geheimnisses (G) zum Vergleich (C) mit einem für die Person individuellen Referenz-Hash-Wert (RH) zu berechnen,
wobei sie eine Transfereinrichtung (TE) zum Empfangen des verschlüsselten Geheimnisses (VG) von einem zentralen Datenbank-Server (DB) besitzt,
wobei die Transfereinrichtung (TE) eingerichtet ist, eine Auswahl (A) von verschlüsselten Geheimnissen (VG) jeweils verschiedener Personen von dem zentralen Datenbank-Server (DB) zu empfangen, und
die Recheneinrichtung (RE) eingerichtet ist, die Auswahl (A) von verschlüsselten Geheimnissen (VG) mit dem für die Person ermittelten biometrischen Schlüssel (MV2) zu entschlüsseln und zu jedem entschlüsselten Geheimnis (G) einen Hash-Wert (HG) zum Vergleich (C) mit einem individuellen Referenz-Hash-Wert (RH) der jeweils verschiedenen Personen zu berechnen,
wobei die Recheneinrichtung (RE) eingerichtet ist, zumindest ein bestimmtes charakteristisches und eindeutig reproduzierbares Auswahlmerkmal (AM) der biometrischen Eigenschaft (BM, BM2) der Person zu ermitteln, und die Transfereinrichtung (TE) eingerichtet ist, das zumindest eine charakteristische Auswahlmerkmal (AM) zum Auswählen der Auswahl (A) von verschlüsselten Geheimnissen (VG) aus einer Vielzahl von verschlüsselten Geheimnissen (VG) an den zentralen Datenbank-Server (DB) zu versenden.

8. Vorrichtung nach Anspruch 7, **dadurch gekennzeichnet, daß** die Recheneinrichtung (RE) eingerichtet ist, numerische Merkmale aus der biometrischen Eigenschaft (BM; BM2) als biometrischen Schlüssel zu extrahieren.

9. Vorrichtung nach Anspruch 7 oder 8, **dadurch gekennzeichnet, daß** die Recheneinrichtung (RE) eingerichtet ist, das entschlüsselte Geheimnis (G) vor dem Berechnen (H) des Hash-Wertes (HG) fehlertolerant zu dekodieren.

10. Vorrichtung nach Anspruch 7, **dadurch gekennzeichnet, daß** die Transfereinrichtung (TE) auch den Referenz-Hash-Wert (RH) von einer zentralen Speichereinrichtung (DB) empfängt und die Recheneinrichtung (RE) eingerichtet ist, den berechneten Hash-Wert (HG) mit dem Referenz-Hash-Wert (RH) zu vergleichen.

11. Vorrichtung nach Anspruch 7, **dadurch gekennzeichnet, daß** die Transfereinrichtung (TE) eingerichtet ist, den berechneten Hash-Wert (HG) an die zentrale Speichereinrichtung (DB) zu versenden zum dortigen Vergleich (C) mit dem Referenz-Hash-Wert (RH).

12. Vorrichtung nach Anspruch 7, **dadurch gekennzeichnet, daß** die Transfereinrichtung (TE) eingerichtet ist, die berechneten Hash-Werte (HG) an die zentrale Speichereinrichtung (DB) zum dortigen Vergleich (C) mit dem Referenz-Hash-Wert (RH) zu versenden.

13. Vorrichtung nach Anspruch 7, **dadurch gekennzeichnet, daß** die Transfereinrichtung (TE) eingerichtet ist, die individuellen Referenz-Hash-Werte (RH) der jeweils verschiedenen Personen von der zentralen Speichereinrichtung (DB) zu empfangen, und die Recheneinrichtung (RE) eingerichtet ist, die Hash-Werte (HG) der entschlüsselten Geheimnisse (G) mit den individuellen Referenz-Hash-Werten (RH) der jeweils verschiedenen Personen zu vergleichen.

14. Vorrichtung nach einem der Ansprüche 12 bis 13, **dadurch gekennzeichnet, daß** die zentrale Speichereinrichtung (DB) eingerichtet ist, die Auswahl (A) von verschlüsselten Geheimnissen (VG) anhand des von der Transfereinrichtung (TE) empfangenen, zumindest einen charakteristischen Auswahlmerkmals (AM) aus einer Vielzahl von Geheimnissen auszuwählen.

15. Registrierungsvorrichtung (RV) zum Registrieren einer Person gemäß Anspruch 4, umfassend eine Digitalisierungseinrichtung (DE) zum Aufnehmen und Digitalisieren einer biometrischen Eigenschaft der zu registrierenden Person, eine Einrichtung (ZG) zum Bereitstellen eines Geheimnisses, eine Recheneinrichtung (RE) zum Ermitteln (ME) eines biometrischen Schlüssels (MV1) aus der biometrischen Eigenschaft (BM; BM1) der Person und zum Verschlüsseln (V) des bereitgestellten Geheimnisses (G) mit dem ermittelten biometrischen Schlüssel (MV1) und ein erstes Register zum Registrieren (R) des verschlüsselten Geheimnisses (VG), **dadurch gekennzeichnet, daß** die Recheneinrichtung (RE) eingerichtet ist, einen Referenz-Hash-Wert (RH) des unverschlüsselten Geheimnisses (G) zu berechnen, und weiter **gekennzeichnet durch** ein zweites Register zum Registrieren (R) des Referenz-Hash-Wertes (RH),
wobei die Recheneinrichtung (RE) eingerichtet ist, zumindest ein bestimmtes charakteristisches und eindeutig reproduzierbares Auswahlmerkmal (AM) aus der biometrischen Eigenschaft (BM; BM1) der Person zu extrahieren, und die Vorrichtung ein drittes Register zum Registrieren dieses zumindest einen charakteristischen Auswahlmerkmals (AM) umfasst,
wobei die Registrierungsvorrichtung (RV) eine Transfereinrichtung (TE) besitzt, die dazu eingerichtet ist, das verschlüsselte Geheimnis (VG), den dazugehörigen Referenz-Hash-Wert (RH) und deren assoziiertes charakteristisches Auswahlmerkmal (AM) an einen zentralen Datenbank-Server (DB) zu übermitteln und dort zu speichern, wobei das zumindest ein charakteristisches Auswahlmerkmal (AM) eine Vorsortierung relevanter verschlüsselter Geheimnisse (VG) und deren zugehöriger Referenz-Hash-Werte (RH) auf dem Datenbank-Server erlaubt.

16. Vorrichtung nach Anspruch 15, **dadurch gekennzeichnet, daß** die Recheneinrichtung (RE) eingerichtet ist, numerische Merkmale aus der biometrischen Eigenschaft (BM; BM1) als biometrischen Schlüssel (MV1) zu extrahieren.

17. Vorrichtung nach Anspruch 15 oder 16, **dadurch gekennzeichnet, daß** die Recheneinrichtung (RE) eingerichtet ist, das unverschlüsselte Geheimnis (G) vor dem Verschlüsseln (V) fehlertolerant zu kodieren.

18. Vorrichtung nach einem der Ansprüche 15 bis 17, **dadurch gekennzeichnet, daß** die Einrichtung (ZG) zum Bereitstellen des Geheimnisses (G) eingerichtet ist, das Geheimnis in Form einer individuellen Identifikationsnummer der Person bereitzustellen.

19. Vorrichtung nach einem der Ansprüche 15 bis 18, **dadurch gekennzeichnet, daß** die Einrichtung (VG) zum Bereitstellen des Geheimnisses (G) das Geheimnis in Form einer individuell erzeugten Zufallszahl bereitstellt.

20. Vorrichtung nach einem der Ansprüche 15 bis 19, **dadurch gekennzeichnet, daß** sowohl das erste Register als auch das zweite Register auf einer zentralen Speichereinrichtung (DB) gespeichert ist.

21. Vorrichtung nach Anspruch 15 mit Anspruch 20, **dadurch gekennzeichnet, daß** das dritte Register auf der zentralen Speichereinrichtung (DB) gespeichert ist.

22. System zum Registrieren und Authentisieren von Personen, umfassend eine Vorrichtung (AV) zum Authentisieren nach einem der Ansprüche 7 bis 11 und eine Vorrichtung (RV) zum Registrieren nach einem der Ansprüche 15 bis 20.

23. System zum Registrieren und Authentisieren von Personen, umfassend eine Vorrichtung (AV) zum Authentisieren nach einem der Ansprüche 12 bis 14 und eine Vorrichtung (RV) zum Registrieren nach Anspruch 21.

## Claims

1. A method for authenticating a registered person, comprising the following steps:
- recording and digitizing a biometric property of a person to be authenticated,
- ascertaining (ME) a biometric key (MV2) from the biometric property (BM; BM2) of the person,
- decrypting (E) an encrypted secret (VG) with the ascertained biometric key (MV2),
- computing (H) a hash value (HG) of the decrypted secret (G),
- comparing (C) the computed hash value (HG) with a reference hash value (RH) individual to the registered person,
- wherein the step of ascertaining (ME) the biometric key (MV2) comprises the extracting (E) of numerical features from the biometric property (BM; BM2) of the person,
wherein a further step of a fault-tolerant decoding (D) of the decrypted secret (KG2) takes place prior to the step of computing (H) the hash value (HG), and
wherein, if the two hash values match, the person concerned is considered correctly authenticated, and
**characterized in that** the steps of recording, of ascertaining (EM), of decrypting (E), of decoding (D) and of computing (H) are carried out by a local authentication device (AV), wherein the encrypted secret (VG) is transmitted from a central database server (DB) to the local authentication device (AV) and the central database server (DB) stores the biometrically encrypted secrets and the associated reference hash values of all the registered persons, and further
**characterized in that** a selection (A) of different encrypted secrets (VG) of respectively different registered persons is decrypted with the biometric key (MV2) ascertained for the person, for each decrypted secret (G) a hash value (HG) is computed and each of these hash values (HG) is compared with an individual reference hash value (RH) of the respectively different registered persons,
wherein the selection (A) of the different encrypted secrets (VG) is selected on the basis of at least one characteristic selection feature (AM) from a multiplicity of encrypted secrets (VG) and
wherein a selection feature is a particular characteristic and uniquely reproducible feature which is ascertained from the biometric property by the local authentication device (AV) and sent to the database server (DB).

2. The method according to claim 1, **characterized in that** the reference hash value (RH) is transmitted from the central storage unit (DB) to the local authentication device (AV) and the step of comparing (C) is carried out by the local authentication device (AV).

3. The method according to claim 1, **characterized in that** the computed hash value (HG) is transmitted to the central storage unit (DB) and the step of comparing (C) is carried out by the central storage unit (DB).

4. A method for registering a person, comprising the following steps:
- recording and digitizing a biometric property of a person to be authenticated,
- providing a secret (G),
- ascertaining (ME) a biometric key (MV1) from the biometric property (BM; BM1) of the person,
- encrypting (V) the secret (G) with the ascertained biometric key (MV1),
- registering (R) the encrypted secret (VG) for the person,
- computing (H) a reference hash value (HG) of the unencrypted secret (G),
- registering (R) the reference hash value (RH) for the person,
- wherein the step of ascertaining (ME) the biometric key (MV1) comprises the extracting of numerical features from the biometric property (BM; BM1) of the person,
- wherein a further step of a fault-tolerant coding (K) of the secret (G) takes place prior to the step of encrypting (V),
**characterized in that** the secret (G) is provided in the form of an individual identification number of the person,
wherein both the step of registering (R) the encrypted secret (VG) and the step of registering (R) the reference hash value (RH) is effected by storing the encrypted secret (VG) and the reference hash value (RH) in a central database server (DB),
wherein the method is carried out by a local registration device (RV), the encrypted secret (VG) and the reference hash value (RH) being communicated to the central database server (DB) for registration (R),
wherein at least one particular characteristic and uniquely reproducible selection feature (AM) is extracted from the biometric property (BM; BM1) of the person and is registered by being stored in the central database server (DB) with the corresponding encrypted secret (VG) and the reference hash value (RG) associated therewith, in order to allow a pre-sorting of relevant encrypted secrets (VG) and reference hash values (RH) associated therewith on the database server.

5. The method according to claim 4, **characterized in that** the secret (G) is provided in the form of an individually generated random number.

6. A registration and authentication method, **characterized in that** the registering is carried out with a method according to any of claims 4 to 5 and the authentication with a method according to any of claims 1 to 3.

7. An authentication device (AV) for authenticating a registered person according to claim 1, comprising a digitization unit (DE) for recording and digitizing a biometric property of the person to be authenticated, a computing unit (RE) for ascertaining a biometric key (MV2) from the biometric property (BM; BM2) of the person and for decrypting (E) an encrypted secret (VG) registered for this person with the ascertained biometric key (MV2), **characterized in that** the computing unit (RE) is arranged to compute a hash value (HG) of the decrypted secret (G) for comparison (C) with a reference hash value (RH) individual to the person,
wherein it has a transfer unit (TE) for receiving the encrypted secret (VG) from a central database server (DB),
wherein a transfer unit (TE) is arranged to receive a selection (A) of encrypted secrets (VG) of respectively different persons from the central database server (DB), and
the computing unit (RE) is arranged to decrypt the selection (A) of encrypted secrets (VG) with the biometric key (MV2) ascertained for the person and to compute for each decrypted secret (G) a hash value (HG) for comparison (C) with an individual reference hash value (RH) of the respectively different persons,
wherein the computing unit (RE) is arranged to ascertain at least one particular characteristic and uniquely reproducible selection feature (AM) of the biometric property (BM, BM2) of the person, and the transfer unit (TE) is arranged to send the at least one characteristic selection feature (AM) for selecting the selection (A) of encrypted secrets (VG) from a multiplicity of encrypted secrets (VG) to the central database server (DB).

8. The device according to claim 7, **characterized in that** the computing unit (RE) is arranged to extract numerical features from the biometric property (BM; BM2) as a biometric key.

9. The device according to claim 7 or 8, **characterized in that** the computing unit (RE) is arranged to fault-tolerantly decode the decrypted secret (G) prior to computing (H) the hash value (HG).

10. The device according to claim 7, **characterized in that** the transfer unit (TE) also receives the reference hash value (RH) from a central storage unit (DB) and the computing unit (RE) is arranged to compare the computed hash value (HG) with the reference hash value (RH).

11. The device according to claim 7, **characterized in that** the transfer unit (TE) is arranged to send the computed hash value (HG) to the central storage unit (DB) for comparing (C) it there with the reference hash value (RH).

12. The device according to claim 7, **characterized in that** the transfer unit (TE) is arranged to send the computed hash values (HG) to the central storage unit (DB) for comparing (C) them there with the reference hash value (RH).

13. The device according to claim 7, **characterized in that** the transfer unit (TE) is arranged to receive the individual reference hash values (RH) of the respectively different persons from the central storage unit (DB), and the computing unit (RE) is arranged to compare the hash values (HG) of the decrypted secrets (G) with the individual reference hash values (RH) of the respectively different persons.

14. The device according to any of claims 12 to 13, **characterized in that** the central storage unit (DB) is arranged to select the selection (A) of encrypted secrets (VG) from a multiplicity of secrets on the basis of the at least one characteristic selection feature (AM) received from the transfer unit (TE).

15. A registration device (RV) for registering a person according to claim 4, comprising a digitization unit (DE) for recording and digitizing a biometric property of the person to be registered, a unit (ZG) for providing a secret, a computing unit (RE) for ascertaining (ME) a biometric key (MV1) from the biometric property; (BM; BM1) of the person and for encrypting (V) the provided secret (G) with the ascertained biometric key (MV1), and a first register for registering (R) the encrypted secret (VG), **characterized in that** the computing unit (RE) is arranged to compute a reference hash value (RH) of the unencrypted secret (G), and further **characterized by** a second register for registering (R) the reference hash value (RH),
wherein the computing unit (RE) is arranged to extract at least one particular characteristic and uniquely reproducible selection feature (AM) from the biometric property (BM; BM1) of the person, and the device comprises a third register for registering this at least one characteristic selection feature (AM),
wherein the registration device (RV) has a transfer unit (TE) which is arranged to transmit the encrypted secret (VG), the pertinent reference hash value (RH) and the associated characteristic selection feature (AM) thereof to a central database (DB) and to store these there, wherein the at least one characteristic selection feature (AM) allows a pre-sorting of relevant encrypted secrets (VG) and associated reference hash values (RH) thereof on the database server.

16. The device according to claim 15, **characterized in that** the computing device (RE) is arranged to extract numerical features from the biometric property (BM; BM1) as a biometric key (MV1).

17. The device according to claim 15 or 16, **characterized in that** the computing unit (RE) is arranged to fault-tolerantly encode the unencrypted secret (G) prior to the encoding (V).

18. The device according to any of claims 15 to 17, **characterized in that** the unit (ZG) for providing the secret (G) is arranged to provide the secret in the form of an individual identification number of the person.

19. The device according to any of claims 15 to 18, **characterized in that** the unit (VG) for providing the secret (G) provides the secret in the form of an individually generated random number.

20. The device according to any of claims 15 to 19, **characterized in that** both the first register and the second register are stored on a central storage unit (DB).

21. The device according to claim 15 with claim 20, **characterized in that** the third register is stored on the central storage unit (DB).

22. A system for registering and authenticating persons, comprising a device (AV) for authenticating according to any of claims 7 to 11 and a device (RV) for registering according to any of claims 15 to 20.

23. A system for registering and authenticating persons, comprising a device (AV) for authenticating according to any of claims 12 to 14 and a device (RV) for registering according to claim 21.

## Revendications

1. Procédé d'authentification d'une personne enregistrée, comprenant les étapes suivantes :
- relevé et numérisation d'une propriété biométrique d'une personne à identifier,
- détermination (ME) d'un clé biométrique (MV2) à partir de la propriété biométrique (BM; BM2) de la personne,
- décryptage (E) d'un secret crypté (VG), avec la clé biométrique (MV2) déterminée,
- calcul (H) d'une valeur de hachage (HG) du secret décrypté (G),
- comparaison (C) de la valeur de hachage (HG) calculée avec une valeur de hachage de référence (RH) individuelle à la personne enregistrée,
- cependant que l'étape de la détermination (ME) de la clé biométrique (MV2) comprend l'extraction (E) de signes distinctifs numériques à partir de la propriété biométrique (BM; BM2) de la personne,
cependant qu'une autre étape d'un décodage (D) tolérant aux fautes du secret décrypté (KG2) a lieu avant l'étape du calcul (H) de la valeur de hachage (HG), et
cependant que, en cas de concordance des deux valeurs de hachage, la personne concernée est considérée comme correctement authentifiée, et
**caractérisé en ce que** les étapes du relevé, de la détermination (EM), du décryptage (E), du décodage (D) et du calcul (H) sont exécutées par un dispositif local d'authentification (AV), cependant que le secret crypté (VG) est transmis d'un serveur central de banque de données (DB) au dispositif local d'authentification (AV) et que le serveur central de banque de données (DB) mémorise les secrets biométriquement cryptés et les valeurs de hachage de référence y étant affectées de toutes les personnes enregistrées, et en outre
**caractérisé en ce qu'**une sélection (A) de différents secrets cryptés (VG) de respectivement différentes personnes enregistrées est décryptée avec la clé biométrique (MV2) déterminée pour la personne, que, pour chaque secret décrypté (G), une valeur de hachage (HG) est calculée, et que chacune de ces valeurs de hachage (HG) est comparée avec une valeur de hachage de référence (RH) individuelle des respectivement différentes personnes enregistrées,
cependant que la sélection (A) des différents secrets cryptés (VG) est choisie à l'aide d'au moins un signe distinctif caractéristique de sélection (AM) parmi une pluralité de secrets cryptés (VG), et
cependant qu'un signe distinctif de sélection est un certain signe distinctif caractéristique et univoquement reproductible qui est déterminé à partir de la propriété biométrique par le dispositif local d'authentification (AV) et est envoyé au serveur central de banque de données (DB).

2. Procédé selon la revendication 1, **caractérisé en ce que** la valeur de hachage de référence (RH) est transmise par l'équipement central de mémorisation (DB) au dispositif local d'authentification (AV), et que l'étape de la : comparaison (C) est exécutée par le dispositif local d'authentification (AV).

3. Procédé selon la revendication 1, **caractérisé en ce que** la valeur de hachage (HG) calculée est transmise à l'équipement central de mémorisation (DB), et que l'étape de la comparaison (C) est exécutée par l'équipement central de mémorisation (DB).

4. Procédé d'enregistrement d'une personne, comprenant les étapes suivantes :
- relevé et numérisation d'une propriété biométrique d'une personne à identifier,
- mise à disposition d'un secret (G),
- détermination (ME) d'un clé biométrique (MV1) à partir de la propriété biométrique (BM; BM1) de la personne,
- cryptage (V) du secret (G) avec la clé biométrique (MV1) déterminée,
- enregistrement (R) du secret crypté (VG) pour la personne,
- calcul (H) d'une valeur de hachage de référence (RH) du secret non crypté (G),
- enregistrement (R) de la valeur de hachage de référence (RH) pour la personne,
- cependant que l'étape de la détermination (ME) de la clé biométrique (MV1) comprend l'extraction de signes distinctifs numériques à partir de la propriété biométrique (BM; BM1) de la personne,
- cependant qu'une autre étape d'un codage (K) tolérant aux fautes du secret (G) a lieu avant l'étape du cryptage (V),
**caractérisé en ce que** le secret (G) est mis à disposition sous forme d'un numéro d'identification individuel de la personne,
cependant que tant l'étape de l'enregistrement (R) du secret crypté (VG) qu'aussi l'étape de l'enregistrement (R) de la valeur de hachage de référence (RH) a lieu par la mémorisation du secret crypté (VG) et de la valeur de hachage de référence (RH) dans un serveur central de banque de données (DB),
cependant que le procédé est exécuté par un dispositif local d'enregistrement (RV), cependant que le secret crypté (VG) et la valeur de hachage de référence (RH) sont transférés pour l'enregistrement (R) au serveur central de banque de données (DB),
cependant qu'au moins un certain signe distinctif de sélection (AM), caractéristique et univoquement reproductible, est extrait à partir de la propriété biométrique (BM; BM1) de la personne et est enregistré par mémorisation dans le serveur central de banque de données (DB) avec le secret crypté correspondant (VG) et la valeur de hachage de référence (RG) y étant affectée, afin de permettre un pré-triage de secrets cryptés (VG) pertinents et de leurs valeurs de hachage de référence (RH) leur étant affectées sur le serveur de banque de données.

5. Procédé selon la revendication 4, **caractérisé en ce que** le secret (G) est mis à disposition sous forme d'un nombre aléatoire individuellement généré.

6. Procédé d'enregistrement et d'authentification, **caractérisé en ce que** l'enregistrement est effectué avec un procédé selon une des revendications de 4 à 5, et que l'authentification est effectuée avec un procédé selon une des revendications de 1 à 3.

7. Dispositif d'authentification (AV) pour l'authentification d'une personne enregistrée selon la revendication 1, comprenant un équipement de numérisation (DE) pour le relevé et la numérisation d'une propriété biométrique de la personne à identifier, un équipement de calcul (RE) pour la détermination d'une clé biométrique (MV2) à partir de la propriété biométrique (BM; BM2) de la personne et pour le décryptage (E) d'un secret crypté (VG) enregistré pour cette personne, avec la clé biométrique (MV2) déterminée, **caractérisé en ce que** l'équipement de calcul (RE) est conçu pour calculer une valeur de hachage (HG) du secret décrypté (G) pour la comparaison (C) avec une valeur de hachage de référence (RH) individuelle à la personne,
cependant qu'il possède un équipement de transfert (TE) pour la réception du secret crypté (VG) de la part d'un serveur central de banque de données (DB),
cependant que l'équipement de transfert (TE) est conçu pour recevoir une sélection (A) de secrets cryptés (VG) de respectivement différentes personnes de la part du serveur central de banque de données (DB), et
que l'équipement de calcul (RE) est conçu pour décrypter la sélection (A) de secrets cryptés (VG) avec la clé biométrique (MV2) déterminée pour la personne, et pour calculer pour chaque secret décrypté (G) une valeur de hachage (HG) pour la comparaison (C) avec une valeur de hachage de référence (RH) individuelle des respectivement différentes personnes,
cependant que l'équipement de calcul (RE) est conçu pour déterminer au moins un certain signe distinctif de sélection (AM), caractéristique et univoquement reproductible, de la propriété biométrique (BM, BM2) de la personne, et que l'équipement de transfert (TE) est conçu pour envoyer au serveur central de banque de données (DB) le au moins un signe distinctif caractéristique de sélection (AM) pour le choix de la sélection (A) de secrets cryptés (VG) parmi une pluralité de secrets cryptés (VG).

8. Dispositif selon la revendication 7, **caractérisé en ce que** l'équipement de calcul (RE) est conçu pour extraire des signes distinctifs numériques à partir de la propriété biométrique (BM; BM2) en tant que clé biométrique.

9. Dispositif selon la revendication 7 ou 8, **caractérisé en ce que** l'équipement de calcul (RE) est conçu pour décoder de manière tolérante aux fautes le secret décrypté (G) avant le calcul de la valeur (H) de hachage (HG).

10. Dispositif selon la revendication 7, **caractérisé en ce que** l'équipement de transfert (TE) reçoit aussi la valeur de hachage de référence (RH) de la part d'un équipement central de mémorisation (DB), et que l'équipement de calcul (RE) est conçu pour comparer la valeur de hachage (HG) calculée avec la valeur de hachage de référence (RH).

11. Dispositif selon la revendication 7, **caractérisé en ce que** l'équipement de transfert (TE) est conçu pour envoyer la valeur de hachage (HG) calculée à l'équipement central de mémorisation (DB) pour qu'il y soit effectué une comparaison (C) avec la valeur de hachage de référence (RH).

12. Dispositif selon la revendication 7, **caractérisé en ce que** l'équipement de transfert (TE) est conçu pour envoyer les valeurs de hachage (HG) calculées à l'équipement central de mémorisation (DB) pour qu'une comparaison (C) avec la valeur de hachage de référence (RH) y soit effectuée.

13. Dispositif selon la revendication 7, **caractérisé en ce que** l'équipement de transfert (TE) est conçu pour recevoir les valeurs de hachage de référence (RH) individuelles des respectivement différentes personnes de la part de l'équipement central de mémorisation (DB), et que l'équipement de calcul (RE) est conçu pour comparer les valeurs de hachage (HG) des secrets décryptés (G) avec les valeur de hachage de référence (RH) individuelles des respectivement différentes personnes.

14. Dispositif selon une des revendications de 12 à 13, **caractérisé en ce que** l'équipement central de mémorisation (DB) est conçu pour choisir la sélection (A) de secrets cryptés (VG) à l'aide du au moins un signe distinctif caractéristique de sélection (AM) parmi une pluralité de secrets, reçu par l'équipement de transfert (TE).

15. Dispositif d'enregistrement (RV) destiné à l'enregistrement d'une personne selon la revendication 4, comprenant un équipement de numérisation (DE) pour le relevé et la numérisation d'une propriété biométrique de la personne à identifier, un équipement (ZG) de mise à disposition d'un secret, un équipement de calcul (RE) pour la détermination (ME) d'un clé biométrique (MV1) à partir de la propriété biométrique (BM; BM1) de la personne et pour le cryptage (V) du secret (G) mis à disposition avec la clé biométrique (MV1) déterminée, et un premier registre pour l'enregistrement (R) du secret crypté (VG), **caractérisé en ce que** l'équipement de calcul (RE) est conçu pour calculer une valeur de hachage de référence (RH) du secret non crypté (G), et **caractérisé en outre par** un deuxième registre pour l'enregistrement (R) de la valeur de hachage de référence (RH),
cependant que l'équipement de calcul (RE) est conçu pour extraire à partir de la propriété biométrique (BM; BM1) de la personne au moins un certain signe distinctif caractéristique de sélection (AM) univoquement reproductible, et que le dispositif comprend un troisième registre pour enregistrer ce au moins un signe distinctif caractéristique de sélection (AM),
cependant que le dispositif d'enregistrement (RV) possède un dispositif de transfert (TE) conçu pour transmettre à un serveur central de banque de données (DB) et y mémoriser le secret crypté (VG), la valeur de hachage de référence (RH) y étant affectée et son signe distinctif caractéristique de sélection (AM) associé, cependant que le moins un signe distinctif caractéristique de sélection (AM) permet un pré-triage de secrets cryptés (VG) pertinents et des valeurs de hachage de référence (RH) leur étant affectées sur le serveur de banque de données.

16. Dispositif selon la revendication 15, **caractérisé en ce que** l'équipement de calcul (RE) est conçu pour extraire des signes distinctifs numériques à partir de la propriété biométrique (BM; BM1) en tant que clé biométrique (MV1).

17. Dispositif selon la revendication 15 ou 16, **caractérisé en ce que** l'équipement de calcul (RE) est conçu pour coder de manière tolérante aux fautes, avant le cryptage (V), le secret (G) non crypté.

18. Dispositif selon une des revendications de 15 à 17, **caractérisé en ce que** l'équipement (ZG) de mise à disposition du secret (G) est conçu pour mettre à disposition le secret sous forme d'un numéro d'identification individuel de la personne.

19. Dispositif selon une des revendications de 15 à 18, **caractérisé en ce que** l'équipement (VG) de mise à disposition du secret (G) met à disposition le secret sous forme d'un nombre aléatoire individuellement généré.

20. Dispositif selon une des revendications de 15 à 19, **caractérisé en ce que** tant le premier registre que le deuxième registre sont mémorisés sur un équipement central de mémorisation (DB).

21. Dispositif selon la revendication 15 en corrélation avec la revendication 20, **caractérisé en ce que** le troisième registre est mémorisé sur l'équipement central de mémorisation (DB).

22. Système d'enregistrement et d'authentification de personnes, comprenant un dispositif (AV) d'authentification selon une des revendications de 7 à 11 et un dispositif (RV) d'enregistrement selon une des revendications de 15 à 20.

23. Système d'enregistrement et d'authentification de personnes, comprenant un dispositif (AV) d'authentification selon une des revendications de 12 à 14 et un dispositif (RV) d'enregistrement selon la revendication 21.
